# EUROPEAN PATENT APPLICATION

(11) **EP 3 346 179 A1**
(43) Date of publication of application: **11.07.2018**
(21) Application number: 17210947.2
(22) Date of filing: 28.12.2017
(51) Int. Cl.: F17C 1/06, F17C 1/14, F17C 1/16, F17C 13/06, F17C 13/08, F17C 1/00

(54) **HIGH PRESSURE CONTAINER AND METHOD OF PRODUCING HIGH-PRESSURE CONTAINER**

(30) Priority: 06.01.2017 JP 2017001347
(71) Applicant: TOYOTA JIDOSHA KABUSHIKI KAISHA, Toyota-shi, Aichi-ken 471-8571 (JP)
(72) Inventor: SAWAI, Osamu, Aichi-ken 471-8571 (JP)
(74) Representative: J A Kemp

(57) **Abstract**

A high-pressure container includes a plurality of body parts (20, 42, 70) arranged side by side, and each of the body parts (20, 42, 70) has a cylindrical shape and has an opening at at least one of its axially opposite end portions. The high-pressure container also includes a cap (28, 34, 76) configured to close the openings of the body parts (20, 42, 70) as a unit, and a communication channel (48) provided inside the cap (28, 34, 76) for communicating interiors of the body parts (20, 42, 70) with each other.

## Description

### BACKGROUND OF THE INVENTION

### 1. Field of the Invention

The invention relates to a high-pressure container and a method of producing a high-pressure container.

### 2. Description of Related Art

A high-pressure hydrogen tank is disclosed in Japanese Patent Application Publication No. 2002-188794 (JP 2002-188794 A). The high-pressure hydrogen tank includes a liner formed in the shape of a barrel, and a reinforcement layer wound around the liner and formed of fiber reinforced resin. With this arrangement, the rigidity of the liner is increased, so that high-pressure hydrogen can be stored within the tank.

### SUMMARY OF THE INVENTION

However, since the high-pressure hydrogen tank disclosed in JP 2002-188794 A is a barrel-shaped, large tank, installation of the high-pressure hydrogen tank on a vehicle may cause reduction of cabin space or luggage space in the vehicle. Namely, the vehicle space may not be efficiently utilized. To solve this problem, it may be considered to provide a plurality of small-diameter tanks that are small enough to be installed in space available in the vehicle. However, the provision of the plurality of tanks may result in an increase of the number of components and a complex configuration. Accordingly, there is some room for improvement in order to provide a simple configuration while efficiently utilizing space in the vehicle.

The invention provides a high-pressure container and a method of producing the high-pressure container, which can provide a simple configuration while efficiently utilizing vehicle space.

A high-pressure container according to a first aspect of the invention includes a plurality of body parts arranged side by side, each of the body parts having a cylindrical shape and having an opening at at least one of axially opposite end portions of the body part, a cap configured to close the openings of the body parts as a unit, and a communication channel provided inside the cap and configured to communicate interiors of the body parts with each other.

According to the above aspect of the invention, the body parts are arranged side by side, and each of the body parts is formed in a cylindrical shape, and is open at at least one of axially opposite end portions thereof. Accordingly, by providing a plurality of body parts having a diameter suited for space available in the vehicle, it is possible to ensure the required amount of fluid stored in the body parts, while minimizing an influence on cabin space and luggage space in the vehicle.

Here, the openings of the body parts are closed as a unit by the cap. Also, the communication channel that communicates the interiors of the body parts with each other is provided in the cap. Namely, the cap makes it possible to close all of the openings of the body parts while allowing the interiors of the body parts to communicate with each other; therefore, it is not necessary to provide members that individually close the openings of the body parts. Thus, the high-pressure container as described above has an excellent effect that the container is simply configured while efficiently utilizing vehicle space.

In the high-pressure container as described above, each of the body parts may be covered with a first fiber reinforced resin member having a fiber direction corresponding to a circumferential direction of the body part, and the first fiber reinforced resin member and the cap may be covered as a unit, along an axial direction of the body part, with a second fiber reinforced resin member having a fiber direction corresponding to the axial direction of the body part.

With the above arrangement, the rigidity and pressure resistance of the body part in the circumferential direction are improved by the first fiber reinforced resin member, and the rigidity and pressure resistance in the axial direction are improved by the second fiber reinforced resin member. Further, the second fiber reinforced resin member covers each of the body parts and the cap as a unit, in the axial direction of the body part; therefore, even when a load is applied axially outward to the cap, due to a pressure of fluid stored within the body part, the opening of the body part can be kept closed by the cap, owing to the second fiber reinforced resin member. Thus, the high-pressure container as described above has an excellent effect that its pressure resistance can be improved.

In this connection, "as a unit" refers to a condition where each of the body parts and the cap are positioned relative to each other.

In the high-pressure container as described above, the cap may be generally in the shape of a semicircular column that is rounded outward in axial directions of the body parts, and the second fiber reinforced resin member may cover the cap along an arc of an outer circumferential surface of the cap.

With the above arrangement, when a load is applied axially outward to the cap, due to a pressure of the fluid stored within the body part, the load is transmitted to the second fiber reinforced resin member that covers the cap, but the load transmitted to the second fiber reinforced resin member can be dispersed or distributed, since the second fiber reinforced resin member covers the cap along the arc-like outer circumferential surface of the cap. Thus, the high-pressure container as described above has an excellent effect that its pressure resistance can be improved.

In the high-pressure container as described above, the cap may be provided with a valve member that controls the amount of a fluid flowing in the communication channel.

Since the cap is provided with the valve member that controls the amount of the fluid flowing in the communication channel, there is no need to provide valve members for the respective body parts. Accordingly, the number of components can be reduced as compared with the arrangement in which two or more tanks are simply connected with each other. Thus, the high-pressure container as described above has an excellent effect that it can be simply configured, while efficiently utilizing vehicle space.

A second aspect of the invention provides a method of producing a high-pressure container including a plurality of body parts arranged side by side, each of the body parts having a cylindrical shape and having an opening at at least one of axially opposite end portions of the body part, a cap configured to close the openings of the body parts as a unit, and a communication channel provided inside the cap and configured to communicate interiors of the body parts with each other. The method includes a first step of winding a first fiber reinforced resin member on each of the body parts, along a circumferential direction of the body part, the first fiber reinforced resin member having a fiber direction corresponding to the circumferential direction of the body part, and a second step of integrally winding a second fiber reinforced resin member on each of the body parts and the cap along an axial direction of the body part, the second fiber reinforced resin member having a fiber direction corresponding to the axial direction of the body part.

According to the above method, the rigidity and pressure resistance of the body part in the circumferential direction are improved by the first fiber reinforced resin member, and the rigidity and pressure resistance of the body part in the axial direction are improved by the second fiber reinforced resin member. Further, the second fiber reinforced resin member is wound on each of the body parts and the cap as a unit; therefore, even when a load is applied axially outward to the cap, due to a pressure of the fluid stored within the body part, the opening of the body part can be kept closed by the cap, owing to the second fiber reinforced resin member. Thus, the production method as described above has an excellent effect that the pressure resistance of the high-pressure container can be improved.

In the method as described above, the cap may be formed generally in the shape of a semicircular column that is rounded outward in axial directions of the body parts, and the second fiber reinforced resin member may be wound along an arc of an outer circumferential surface of the cap.

According to the above method, when a load is applied axially outward to the cap, due to a pressure of the fluid stored within the body part, the load is transmitted to the second fiber reinforced resin member that covers the cap, but the load transmitted to the second fiber reinforced resin member can be dispersed or distributed, since the second fiber reinforced resin member covers the cap along the arc-like outer circumferential surface of the cap. Thus, the production method as described above has an excellent effect that the pressure resistance of the high-pressure container can be further improved.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a plan view showing a tank module as a high-pressure container according to one embodiment, as viewed from above a vehicle;
FIG. 1B is a side view showing the tank module of FIG. 1A, as viewed from one side of the vehicle;
FIG. 1C is a rear view showing the tank module of FIG. 1A, as viewed from the rear of the vehicle;
FIG. 2 is an enlarged cross-sectional view showing a condition taken along line II-II in FIG. 1A; and
FIG. 3 is an enlarged cross-sectional view showing a condition taken along line III-III in FIG. 1B.

### DETAILED DESCRIPTION OF EMBODIMENTS

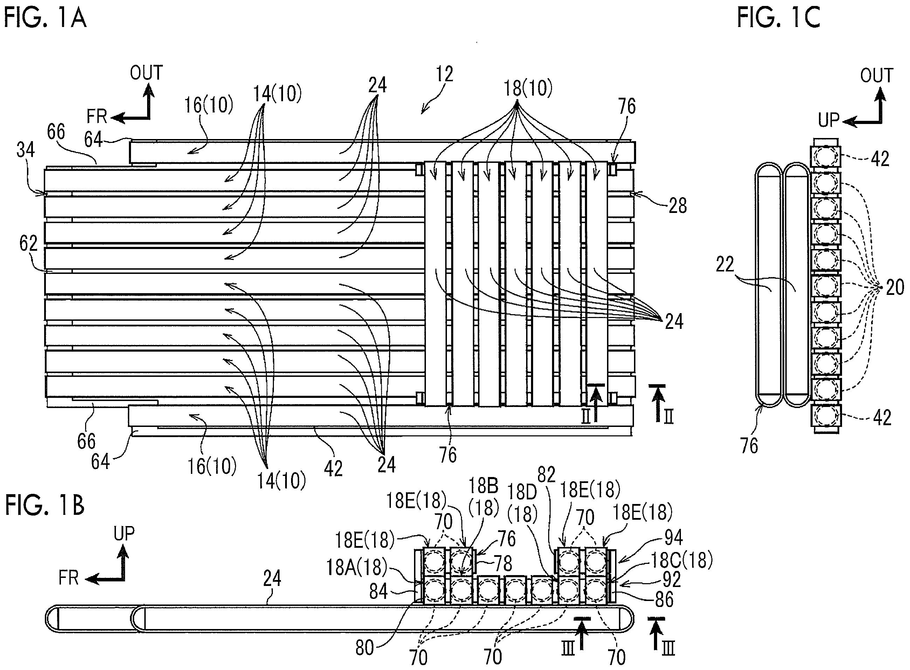

Referring to FIG. 1A to FIG. 3, a high-pressure container according to one embodiment of the invention will be described. In the figures, arrow FR denotes the front side in the vehicle longitudinal direction, and arrow OUT denotes the outer side in the vehicle width direction, while UP denotes the upper side in the vehicle vertical direction.

As shown in FIG. 1A, FIG. 1B, and FIG. 1C, a tank module 12 is provided by assembling a plurality of tank bodies 10 together. More specifically, the tank module 12 consists of first tank bodies 14, second tank bodies 16, and third tank bodies 18. The tank module 12 is located on the vehicle lower side of a floor panel (not shown) of a fuel cell vehicle, as one example.

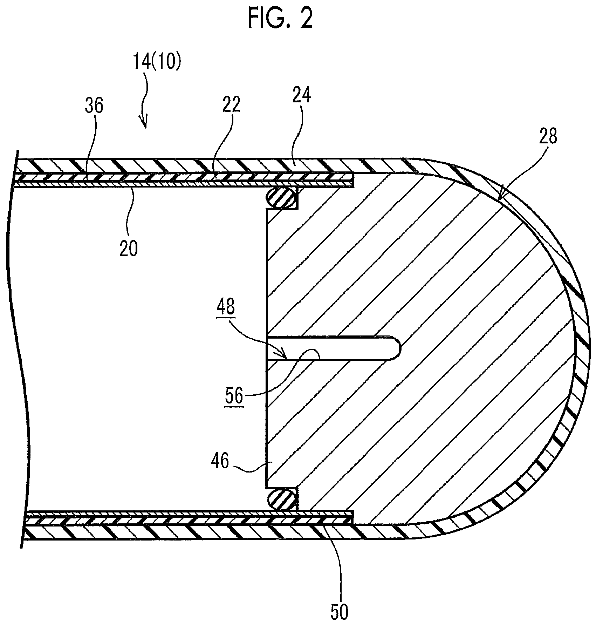

Each of the first tank bodies 14 is formed in a cylindrical shape having an axial direction (longitudinal direction) corresponding to the vehicle longitudinal or front-back direction. As shown in FIG. 2, the first tank body 14 includes a body part 20, a first fiber reinforced resin member 22, and a second fiber reinforced resin member 24. The body part 20 is formed in a cylindrical shape, and is open at its axially opposite end portions. The body part 20 is formed of aluminum alloy, as one example. The diameter of the body part 20 is determined so that it can be accommodated in space available on the vehicle lower side of the floor panel.

The first fiber reinforced resin member 22 is formed by winding a sheet-like CFRP (carbon fiber reinforced resin) on an outer circumferential surface 36 of the body part 20. In the interior of the first fiber reinforced resin member 22, carbon fibers (not shown) are arranged in the circumferential direction of the body part 20. In other words, the fiber direction of the first fiber reinforced resin member 22 is the circumferential direction of the body part 20.

As shown in FIG. 1A and FIG. 1C, a plurality of (nine in this embodiment) body parts 20 of the first tank bodies 14 on which the first fiber reinforced resin members 22 are wound are arranged side by side in the vehicle width direction. Also, a pair of right and left body parts 42 of the second tank bodies 16, each of which has basically the same configuration as the first tank body 14, is placed on the outer sides in the vehicle width direction of the first tank bodies 14 thus arranged.

Like the body part 20 of the first tank body 14, the body part 42 of the second tank body 16 is formed in a cylindrical shape, and is open at its axially opposite end portions. The body part 42 has substantially the same diameter as the body part 20 of the first tank body 14, and is formed of aluminum alloy, as one example. The length of the body part 42 of the second tank body 16 as measured in the axial direction is set to be shorter than that of the body part 20 of the first tank body 14. Like the body part 20 of the first tank body 14, the first fiber reinforced resin member 22 (not shown) is wound on an outer circumferential surface of the body part 42 of the second tank body 16.

End portions of the body parts 20 of the first tank bodies 14 on one side (vehicle rear side) in the axial direction, and end portions of the body parts 42 of the second tank bodies 16 on one side (vehicle rear side) in the axial direction, are located at substantially the same position in the vehicle longitudinal direction. A cap 28 is inserted into the end portions of the body parts 20 on one side (vehicle rear side) in the axial direction, and the end portions of the body parts 42 on one side (vehicle rear side) in the axial direction. The first tank bodies 14 and the second tank bodies 16 are placed along the floor panel of the vehicle.

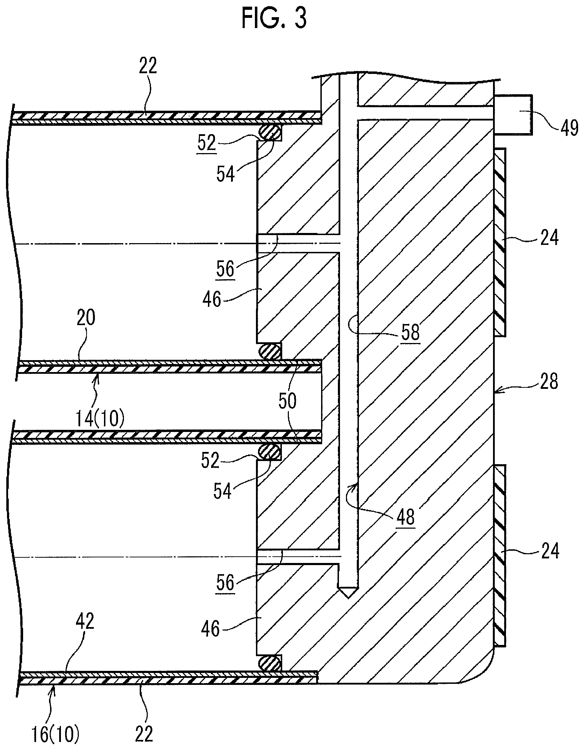

As shown in FIG. 2, the cap 28 is formed generally in the shape of a semicircular column, which has an axial direction corresponding to the vehicle width direction, and is rounded outward in the axial direction of the body part 20. As shown in FIG. 3, the cap 28 has body-part inserted portions 46, and a communication channel 48. The body-part inserted portions 46 are located at positions corresponding to the respective body parts 20 of the first tank bodies 14 and the respective body parts 42 of the second tank bodies 16, and each body-part inserted portion 46 is formed generally in the shape of a column that protrude inward in the axial direction of the corresponding body part 20, 42. An outer circumferential surface 50 of the body-part inserted portion 46 is in abutting contact with an inner circumferential surface of the corresponding body part 20, 42. Also, a packing receiving portion 52, which is formed by notching an outer edge portion of each body-part inserted portion 46, is provided at a distal end portion of the body-part inserted portion 46, and an O-ring 54 is received in the packing receiving portion 52. The O-ring 54 is elastically deformed in radial directions of the body part 20, 42. The end portions of the body parts 20 on one side (vehicle rear side) in the axial direction, and the end portions of the body parts 42 on one side (vehicle rear side) in the axial direction, are respectively closed by the body-part inserted portions 46.

The communication channel 48 is formed within the cap 28, and includes a plurality of first communication channels 56 and a second communication channel 58. The first communication channels 56 extend within the body-part inserted portions 46 along the axial directions of the body parts 20, 42, and are open toward the inner side in the axial directions. The second communication channel 58 connects the first communication channels 56 with each other in the vehicle width direction. With this arrangement, the interiors of the body parts 20 of the first tank bodies 14 and the interiors of the body parts 42 of the second tank bodies 16 are in communication with each other.

As shown in FIG. 1A and FIG. 1B, a cap 34 is inserted into end portions of the body parts 20 of the first tank bodies 14 on the other side (vehicle front side) in the axial direction, and end portions of the body parts 42 of the second tank bodies 16 on the other side (vehicle front side) in the axial direction.

The cap 34 has a first cap constituent portion 62, a pair of right and left second cap constituent portions 64, and a pair of right and left cap connecting portions 66. The first cap constituent portion 62 is formed generally in the shape of a semicircular column, which has an axial direction corresponding to the vehicle width direction, and is rounded outward in the axial direction of the body part 20. The second cap constituent portions 64 are provided adjacent to opposite end portions of the first cap constituent portions 62 as viewed in the vehicle width direction. The cap connecting portions 66 connect the opposite end portions of the first cap constituent portions 62 in the vehicle width direction, with inner end portions of the second cap constituent portions 64 in the vehicle width direction. The first cap constituent portions 62, second cap constituent portions 64, and the cap connecting portions 66 are formed into an integral structure.

The first cap constituent portion 62 has basically the same configuration as the cap 28, and closes respective end portions, on the other side (vehicle front side) in the axial direction, of the body parts 20 of the first tank bodies 14. The second cap constituent portions 64 have basically the same configuration as the cap 28, and close respective end portions, on the other side (vehicle front side) in the axial direction, of the body parts 42 of the right and left second tank bodies 16. A communication channel (not shown) provided within the first cap constituent portion 62 and communication channels (not shown) provided within the second cap constituent portions 64 are connected in the vehicle longitudinal direction by communication channels (not shown) provided within the cap connecting portions 66. Namely, the interiors of the body parts 20 of the first tank bodies 14 and the interiors of the body parts 42 of the second tank bodies 16 are in communication with each other.

As shown in FIG. 2, the second fiber reinforced resin member 24 is provided on outer surfaces of the first fiber reinforced resin member 22 and the caps 28, 34 (see also FIG. 1B). More specifically, the second fiber reinforced resin member 24 is a sheet-like CFRP (carbon fiber reinforced resin) similar to the first fiber reinforced resin member 22, and the second fiber reinforced resin member 24 is integrally wound, along the axial direction of the body part 20, on the outer surfaces of the first fiber reinforced resin member 22 and the caps 28, 34. In the interior of the second fiber reinforced resin member 24, carbon fibers (not shown) are arranged in the axial direction of the body part 20. In other words, the fiber direction of the second fiber reinforced resin member 24 is the axial direction of the body part 20. The amount of fibers in the second fiber reinforced resin member 24 is a half of the amount of fibers in the first fiber reinforced resin member 22. In this embodiment, regions of the second fiber reinforced resin member 24 wound on the body part 20 are shaped so as not to follow the circumferential direction of the body part 20 (see FIG. 1B and FIG. 1C). However, the invention is not limited to this arrangement, but the second fiber reinforced resin member 24 may be formed in an arc-like shape, following the circumferential direction of the body part 20.

As shown in FIG. 1A, FIG. 1B, and FIG. 1C, each of the second tank bodies 16 is provided with the second fiber reinforced resin member 24, like the first tank body 14. More specifically, the second fiber reinforced resin member 24 is integrally wound, along the axial direction of the body part 42, on outer surfaces of the first fiber reinforced resin member 22 of the second tank body 16 and the caps 28, 34.

The third tank bodies 18 have basically the same configuration as the first tank bodies 14. More specifically, each of the third tank bodies 18 has a body part 70 that extends in an axial direction corresponding to the vehicle width direction, and has the same diameter as that of the first tank body 14, a first fiber reinforced resin member 22 wound in the circumferential direction on an outer circumferential surface of the body part 70, a pair of right and left caps 76 provided at axially opposite end portions of the body part 70, and a second fiber reinforced resin member 24 wound on outer surfaces of the first fiber reinforced resin member 22 and the caps 76 of the third tank body 18. The axial length of the third tank body 18 is set to be substantially equal to a distance from one end portion, in the vehicle width direction, of the first tank bodies 14 arranged in the vehicle width direction, to the other end portion in the vehicle width direction. As shown in FIG. 1B, the third tank bodies 18 are constituted by a first-level portion 92 and a second-level portion 94. In the first-level portion 92, a plurality of (seven in this embodiment) third tank bodies 18 are arranged side by side in the vehicle longitudinal direction, and are also mounted on vehicle rear end portions of the first tank bodies 14. The first-level portion 92 includes a third tank body 18A that provides a vehicle front end portion of the first-level portion 92, a third tank body 18B located adjacent to the third tank body 18A, a third tank body 18C that provides a vehicle rear end portion of the first-level portion 92, and a third tank body 18D located adjacent to the third tank body 18C. The second-level portion 94 consists of third tank bodies 18E mounted on the third tank bodies 18A, 18B, 18C, 18D, respectively. The third tank bodies 18 are placed in space available, which is formed in the vicinity of a cross member (not shown) of the vehicle.

End portions of the body parts 70 of the third tank bodies 18 on one side in the axial direction, and end portions of the body parts 70 on the other side in the axial direction, are closed as a unit by a pair of right and left caps 76, respectively. Each of the caps 76 has a first cap constituent member 78, a second cap constituent member 80, and a third cap constituent member 82 each formed generally in the shape of a semicircular column that has an axial direction corresponding to the vehicle longitudinal direction, and is rounded outward in the axial directions of the body parts 70. The cap 76 further has a first connecting portion 84 that connects the first cap constituent member 78 with the second cap constituent member 80, and a second connecting portion 86 that connects the third cap constituent member 82 with the second cap constituent member 80. The first cap constituent member 78, second cap constituent member 80, third cap constituent member 82, first connecting portion 84, and the second connecting portion 86 are formed into an integral structure.

The first cap constituent member 78, second cap constituent member 80, and the third cap constituent member 82 have basically the same configuration as the cap 28. The first cap constituent members 78 of the right and left caps 76 respectively close axially opposite end portions of the body parts 70 of the two third tank bodies 18E mounted on the third tank body 18A and the third tank body 18B. Also, the second cap constituent members 80 of the right and left caps 76 respectively close axially opposite end portions of all of the body parts 70 in the first-level portion 92. Further, the third cap constituent members 82 of the right and left caps 76 respectively close axially opposite end portions of the body parts 70 of the two third tank bodies 18E mounted on the third tank body 18C and the third tank body 18D. Communication channels (not shown) provided inside the first cap constituent members 78 and communication channels (not shown) provided inside the second cap constituent members 80 are connected in the vehicle vertical direction by communication channels (not shown) provided inside the corresponding first connecting portions 84. Similarly, communication channels (not shown) of the third cap constituent members 82 and communication channels (not shown) of the second cap constituent members 80 are connected in the vehicle vertical direction by communication channels (not shown) provided inside the corresponding second connecting portions 86. Namely, the interiors of the body parts 70 of the third tank bodies 18 are in communication with each other.

The communication channel 48 in the cap 28 is provided with a valve 49 (see FIG. 3) as a valve member. The valve 49 makes it possible to control the amount of the fluid flowing in the communication channel 48. Similarly, valves 49 are also provided in the communication channels in the caps 34, 76. Then, the caps 28, 34, 76 are respectively connected to a fuel cell stack or stacks, supply pipe or pipes, and so forth, which are not illustrated.

Next, a method of producing a high-pressure container will be described. As shown in FIG. 2, on the outer circumferential surfaces of the body parts 20 of the first tank bodies 14, the first fiber reinforced resin members 22 are wound in the circumferential directions of the body parts 20, as described above. Similarly, on the body parts 42 of the second tank bodies 16 and the body parts 70 of the third tank bodies 18, the first fiber reinforced resin members 22 are also wound in the respective circumferential directions of the body parts 42, 70. This step corresponds to the "first step" of the invention.

As shown in FIG. 1C, the body parts 20, 42 on which the first fiber reinforced resin members 22 are wound in the first step are arranged side by side in the vehicle width direction, and the caps 28, 34 are respectively inserted into the axially opposite end portions of the body parts 20, 42. Then, the second fiber reinforced resin members 24 are integrally wound, along the axial directions of the body parts 20, 42, on the body parts 20, 42 on which the first fiber reinforced resin members 22 are wound, and the caps 28, 34. Similarly, the body parts 70 on which the first fiber reinforced resin member 22 are wound in the first step are arranged side by side in the vehicle longitudinal direction, as shown in FIG. 1B, and the caps 76 are respectively inserted into the axially opposite end portions of the body parts 70. Then, the second fiber reinforced resin members 24 are integrally wound, along the axial directions of the body parts 70, on the body parts 70 on which the first fiber reinforced resin members 22 are wound, and the caps 76. This step corresponds to the "second step" of the invention. In the second step, a single second fiber reinforced resin member 24 may be wound one by one on each set of the body parts 20, 42, 70 and the caps 28, 34, 76, or a plurality of second fiber reinforced resin members 24 may be simultaneously wound on the body parts 20, 42 and the caps 28, 34 (or on the body parts 70 and the caps 76). Then, the third tank bodies 18 on which the second fiber reinforced resin members 24 are wound are placed on and fixed to the first tank bodies 14 and the second tank bodies 16 on which the second fiber reinforced resin members 24 are wound, so that the tank module 12 is produced.

Next, the operation and effects of this embodiment will be described.

In this embodiment, each of the body parts 20, 42, 70 is formed in a cylindrical shape, and is open at its axially opposite end portions, as shown in FIG. 1A to FIG. 1C. The body parts 20, 42 thus plurally provided are arranged side by side. Similarly, the body parts 70 plurally provided are arranged side by side. Accordingly, by providing the body parts 20, 42, 70 each having a diameter suited for space available in the vehicle, it is possible to ensure the required amount of fluid stored in the body parts 20, 42, 70, while minimizing an influence on the cabin space and luggage space in the vehicle.

Here, the openings of the body parts 20, 42, 70 are collectively closed by the caps 28, 34, 76. Also, the communication channels 48, etc. that communicate the interiors of the body parts 20, 42, 70 with each other are provided in the caps 28, 34, 76. Since all of the openings of the body parts 20, 42, 70 can be closed by the caps 28, 34, 76, no members are required for individually closing the openings of the body parts 20, 42, 70. Also, since the communication channels 48, etc. of the caps 28, 34, 76 are provided with the valves 49 that can control the amounts of the fluid flowing in the communication channels 48, etc., there is no need to provide a valve 49 in each of the body parts 20, 42, 70. Accordingly, the number of components can be reduced, as compared with an arrangement in which a plurality of tanks is simply connected. Thus, it is possible to provide a simple arrangement, while efficiently utilizing vehicle space.

Each of the body parts 20, 42, 70 is covered with the first fiber reinforced resin member 22 in which the fiber direction is the circumferential direction of the body part 20, 42, 70, and each of the body parts 20, 42, 70 and the corresponding caps 28, 34, 76 are covered as a unit, along the axial direction of the body part 20, 42, 70, with the second fiber reinforced resin members 24 in which the fiber direction is the axial direction of the body part 20, 42, 70. Accordingly, the rigidity and pressure resistance of the body part 20, 42, 70 in the circumferential direction are improved by the first fiber reinforced resin member 22, and the rigidity and pressure resistance of the body part 20, 42, 70 in the axial direction are improved by the second fiber reinforced resin member 24. Further, the second fiber reinforced resin member 24 covers each of the body parts 20, 42, 70 and corresponding ones of the caps 28, 34, 76 as a unit, along the axial direction of the body part; therefore, even when loads are applied axially outward to the caps 28, 34, 76, due to pressures of the fluid stored within the body part 20, 42, 70, the openings of the body part 20, 42, 70 can be kept closed by the caps 28, 34, 76, owing to the second fiber reinforced resin member 24. As a result, the pressure resistance of the tank body 10 can be improved.

Further, each of the caps 28, 34, 76 is formed generally in the shape of a semicircular column that is rounded outward in the axial directions of the corresponding body parts 20, 42, 70, and the second fiber reinforced resin member 24 covers the cap 28, 34, 76 along an arc of the outer circumferential surface of the cap 28, 34, 76. In this connection, when a load is applied axially outward to the cap 28, 34, 76, due to a pressure of the fluid stored within the body part 20, 42, 70, the load is transmitted to the second fiber reinforced resin member 24 that covers the cap 28, 34, 76; however, since the second fiber reinforced resin member 24 covers the cap 28, 34, 76 along the arc-like outer circumferential surface of the cap 28, 34, 76, the load transmitted to the second fiber reinforced resin member 24 can be distributed or dispersed. In this manner, the pressure resistance of the tank body 10 can be further improved.

Further, on each of the body parts 20, 42, 70 which is formed in a cylindrical shape and is open at at least one end portion thereof, the first fiber reinforced resin member 22 in which the fiber direction is the circumferential direction of the body part 20, 42, 70 is wound along the circumferential direction of the body part 20, 42, 70, in the first step. Also, on each of the body parts 20, 42, 70 and the corresponding caps 28, 34, 76, the second fiber reinforced resin member 24 in which the fiber direction is the axial direction of the body part 20, 42, 70 is integrally wound along the axial direction of the body part 20, 42, 70, in the second step. With this arrangement, the rigidity and pressure resistance of the body parts 20, 42, 70 in the circumferential directions are improved by the first fiber reinforced resin members 22, and the rigidity and pressure resistance in the axial directions are improved by the second fiber reinforced resin members 24. Further, the second fiber reinforced resin member 24 is integrally wound on each of the body parts 20, 42, 70 and the corresponding caps 28, 34, 76; therefore, even when loads are applied axially outward to the caps 28, 34, 76, due to the pressures of the fluid stored within the body parts 20, 42, 70, the openings of the body parts 20, 42, 70 can be kept closed by the caps 28, 34, 76, owing to the second fiber reinforced resin members 24. In this manner, the pressure resistance of the tank bodies 10 can be improved.

While each of the caps 28, 34, 76 is formed generally in the shape of a semicircular column in the illustrated embodiment, the shape of the cap 28, 34, 76 is not limited to this, but the cap 28, 34, 76 may be formed in other shapes, such as a square column.

While the body parts 20, 42, 70 are formed of aluminum alloy, the material of the body parts 20, 42, 70 is not limited to this, but the body parts 20, 42,70 may be formed of a material, such as nylon resin, which inhibits permeation of hydrogen stored therein. While hydrogen is stored in the tank bodies 10, other gas, or liquid, such as LPG (Liquefied Petroleum Gas), may be stored.

While each of the body parts 20, 42, 70 is open at its axially opposite end portions in the illustrated embodiment, each of the body parts 20, 42, 70 may be formed in a cylindrical shape with a bottom, and may be open at only one axial end portion thereof, such that only the axial end portion is closed by the corresponding cap 28, 34, 76.

While the interiors of the first tank bodies 14 and the interiors of the second tank bodies 16 communicate in parallel with each other, via the communication channels 48, etc. of the caps 28, 34, the arrangement of the tank bodies is not limited to this, but the interiors of the tank bodies may communicate in series with each other (via a single serpentine channel as viewed in the plane of the vehicle, including the interiors of the first tank bodies 14 and second tank bodies 16 and the communication channels 48, etc. of the caps 28, 34). This arrangement may also apply to the third tank bodies 18.

While the embodiments of the invention have been described above, the invention is not limited to the above embodiments, but may be embodied with various modifications other than those as described above, without departing from the principle of the invention.

## Claims

1. A high-pressure container comprising:
a plurality of body parts (20, 42, 70) arranged side by side, each of the body parts (20, 42, 70) having a cylindrical shape and having an opening at at least one of axially opposite end portions of the body part (20, 42, 70);
a cap (28, 34, 76) configured to close the openings of the body parts (20, 42, 70) as a unit; and
a communication channel (48) provided inside the cap (28, 34, 76) and configured to communicate interiors of the body parts (20, 42, 70) with each other.

2. The high-pressure container according to claim 1, wherein:
each of the body parts (20, 42, 70) is covered with a first fiber reinforced resin member (22) having a fiber direction corresponding to a circumferential direction of the body part (20, 42, 70); and
the first fiber reinforced resin member (22) and the cap (28, 34, 76) are covered as a unit, along an axial direction of the body part (20, 42, 70), with a second fiber reinforced resin member (24) having a fiber direction corresponding to the axial direction of the body part (20, 42, 70).

3. The high-pressure container according to claim 2, wherein:
the cap (28, 34, 76) is generally in a shape of a semicircular column that is rounded outward in axial directions of the body parts (20, 42, 70); and
the second fiber reinforced resin member (24) covers the cap (28, 34, 76) along an arc of an outer circumferential surface of the cap (28, 34, 76).

4. The high-pressure container according to any one of claims 1 - 3, wherein the cap (28, 34, 76) is provided with a valve member (49) that controls an amount of a fluid flowing in the communication channel (48).

5. A method of producing a high-pressure container including a plurality of body parts (20, 42, 70) arranged side by side, each of the body parts (20, 42, 70) having a cylindrical shape and having an opening at at least one of axially opposite end portions of the body part (20, 42, 70), a cap (28, 34, 76) configured to close the openings of the body parts (20, 42, 70) as a unit, and a communication channel (48) provided inside the cap (28, 34, 76) and configured to communicate interiors of the body parts (20, 42, 70) with each other, the method comprising:
a first step of winding a first fiber reinforced resin member (22) on each of the body parts (20, 42, 70), along a circumferential direction of the body part (20, 42, 70), the first fiber reinforced resin member (22) having a fiber direction corresponding to the circumferential direction of the body part (20, 42, 70); and
a second step of integrally winding a second fiber reinforced resin member (24) on each of the body parts (20, 42, 70) and the cap (28, 34, 76) along an axial direction of the body part (20, 42, 70), the second fiber reinforced resin member (24) having a fiber direction corresponding to the axial direction of the body part (20, 42, 70).

6. The method according to claim 5, wherein:
the cap (28, 34, 76) is formed generally in a shape of a semicircular column that is rounded outward in axial directions of the body parts (20, 42, 70); and
the second fiber reinforced resin member (24) is wound along an arc of an outer circumferential surface of the cap (28, 34, 76).
